# EUROPÄISCHE PATENTSCHRIFT

(11) **EP 1 103 652 B1**
(45) Veröffentlichungstag und Bekanntmachung des Hinweises auf die Patenterteilung: **12.10.2005**
(21) Anmeldenummer: 00811119.7
(22) Anmeldetag: 24.11.2000
(51) Int. Cl.: D07B 1/00, B60P 7/08

(54) **Textiles Band zur Verwendung als Anschlagmittel und/oder zur Ladungssicherung**
Textile strap for use as fastening and/or load-securing means
Bande textile pour utilisation comme moyen de serrage et/ou arrimage de charge

(30) Priorität: 25.11.1999 CH 215599
(43) Veröffentlichungstag der Anmeldung: 30.05.2001
(73) Patentinhaber: Mammut Tec AG, 5703 Seon (CH)
(72) Erfinder: Colijn, Joop, 3174 Thörishaus (CH); Accogli, Domenico, 5610 Wohlen (CH)
(74) Vertreter: Becker, Konrad

(56) Entgegenhaltungen:
- EP-A- 0 116 916
- DE-A- 3 130 469
- DE-A- 3 246 945

## Beschreibung

Die Erfindung betrifft ein textiles Band zur Verbesserung des Schnittschutzes gemäss den Ansprüchen 1 und 11.

Textile Anschlagmittel (EN 1492-1 und 1492-2) und Bänder zum Tragen von Lasten bzw. zur Ladungssicherung (EN 12195-1 und EN 12195-2) haben sich zu Lasten von metallischen Vorrichtungen durchgesetzt. Die bisher verwendeten textilen Produkte zeichnen sich aus durch hohe Tragfähigkeit, günstige Preise, geringes Gewicht, einfache Handhabung (meistens ist nur eine Person erforderlich), schonende Behandlung der Lasten und gute Erkennbarkeit der Tragfähigkeit.
Als textiler Faserstoff hat sich vor allem Polyester (PES) durchgesetzt. Dieses Material wird auf Grund seines Preis-/Leistungsverhältnisses und seiner physikalischen und chemischen Eigenschaften bevorzugt (DE-A-3 130 469).

Die bisher verwendeten textilen Bänder können jedoch oft bei scharfkantigen Lasten nicht oder nur teilweise eingesetzt werden. Sobald textile Fasern auf Zugkraft beansprucht werden, nimmt die Schnittschutzfähigkeit sehr stark ab. Weiter ist bekannt, dass sich sogenannte Hochleistungstextilfasem wie z.B. Para-Aramiden (195 cN/tex) bei Verarbeitung zu Stapelfasern (hohes Volumen) als Schnittschutz z.B. für Sicherheitshandschuhe, Motorradbekleidung etc. (PCT/US89/03512) gut eignen. Die Verwendung dieser Fasern für Anschlagmittel und Ladungssicherung wurde schon oft vorgeschlagen, hat sich jedoch nicht durchgesetzt, weil diese Fasern erhebliche Nachteile aufweisen, wie z.B. geringe dynamische Belastbarkeit und geringe Abriebfestigkeit. Weiter hat es sich gezeigt, dass die Schnittschutzfestigkeit bei Zugkraftbeanspruchung auch bei diesen Fasern enorm heruntergesetzt wird. Die obenerwähnte Verwendung von Stapelfasern ist ebenfalls für Anschlagmittel und Bänder für Zurrgurten nicht geeignet (Bruchkraft wird um mehr als 50 % heruntergesetzt).

Um diese Nachteile zu beheben, sind Materialien am Markt bekannt, bei denen textile Bänder mit dicken Polyurethanschichten, teilweise mit metallischen Einlagen, versehen sind (DE 3130469, EP 0102933). Diese Materialien sind jedoch unhandlich und steif, so dass die spezifischen Vorteile der textilen Bänder wieder aufgehoben werden.

Aufgabe der Erfindung ist es nun, die vorerwähnten Nachteile aufzuheben und die Schnittschutzfähigkeit der textilen Bänder für die genannte Anwendung stark zu verbessern.

Erfindungsgemäss wird diese Aufgabe mit einem textilen Band gemäss dem Wortlaut nach Patentanspruch 1 gelöst und mit einer Verwendung gemäss dem Wortlaut nach Patentanspruch 11.

Die Erfindung wird im Folgenden anhand der Zeichnung näher erläutert. Es zeigt:

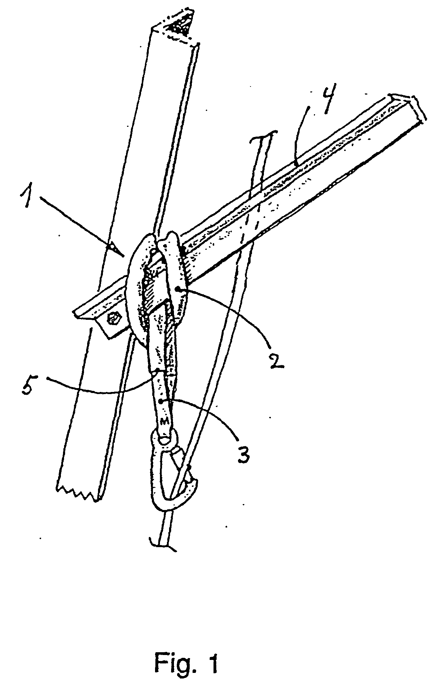

- Fig. 1: Schematischer Darstellung des erfindungsgemässen textilen Bandes.

Fig. 1 zeigt in schematischer Darstellung ein textiles Band als Anschlagmittel für eine persönliche Schutzausrüstung.
Ein textiles Band 1 weist über einem lasttragenden Bandelement 3 ein schlauchförmiges Schnittschutzelement 2 auf, welches an einem Ende mit einer Nähnaht 5 am lasttragenden Bandelement 3 fixiert ist. Das Schnittschutzelement 2 bietet Schutz vor der scharfen Profilkante 4.
Es hat sich überraschenderweise gezeigt, dass der Schnittschutz durch die erfindungsgemässe Konstruktion bei den genannten Anschlagmitteln und Bändern für Zurrgurten mit einer bestimmten Verarbeitungsweise erheblich gesteigert werden kann. Dies erfolgt durch Verwendung von Hochleistungsfasern mit normalem Polyester (PES) und vielen Umlenkungen (hohes Volumen) und erfindungsgemässer Integration des Schnittschutzelementes 2 in das lasttragende Bandelement 3, wobei das Schnittschutzelement nicht auf Zugkraft beansprucht wird.
Das Schnittschutzelement 2 besteht mindestens teilweise aus einer Mischung von Hochleistungsfasern, Stapelfasern oder Endlosfasern wie etwa Aramid-, hochfeste Polyäthylen-, Keramik- oder Metallfasern. Die Erhöhung des Schnittschutzes kann zudem mit Anteilen von Glasfasern erfolgen.
Die verwendeten Hochleistungsfasern weisen in der Regel eine Festigkeit von höher als 90 cN/tex auf.
Das Schnittschutzelement kann an der Bandkante des lasttragenden Bandelementes eingearbeitet werden oder mit einem dehnfähigen Gummifaden eingearbeitet vorliegen. Es ist am lasttragenden Bandelement mindestens stellenweise fixiert und damit unverlierbar.

Im weiteren werden zwei Ausführungsbeispiele beschrieben.

### Beispiel 1

Ein Verbindungs- bzw. Anschlagmittel gemäss EN 354/795 wurde aus einem textilen Band gemäss EN 1492-1 gefertigt. Das Verbindungs- und Anschlagmittel gemäss EN 354/795 wurde aus einem 1t Hebegurt 3 gemäss EN 1492-1 gefertigt. Es zeigte sich, dass dieses Anschlagmittel nicht zum Besteigen von Gittermasten geeignet ist, weil die scharfen Profilkanten 4 das genannte textile Band bei Belastung durchschneiden. Dieses textile Band 1 wird jetzt mit einem erfindungsgemässen Schlauchband 2, bzw. Schnittschutzelement versehen und nur am oberen Ende mit einer Nähnaht 5 fixiert. Bei Belastung wird nur das Gurtband, bzw. lastentragende Bandelement 3 auf Zug beansprucht.

### Beispiel 2

Ein textiles Band gemäss EN 1492-1 wird für das Tragen von Lasten bzw. als Anschlagmittel verwendet. Diese textilen Bänder sind in der Konfektion ziemlich teuer. Aus diesem Grund wird vom Markt her eine hohe Lebensdauer erwünscht.
Die schwächste Stelle dieser textilen Bänder sind die Kanten. Diese werden oft beim Kontakt mit scharfen Kanten, wie Flacheisen, sehr schnell in Mitleidenschaft gezogen. Die Langlebigkeit wird durch die erfindungsgemässe Verwendung von einem Schnittschutzelementen sehr stark erhöht, indem das Schnittschutzelemente erst mit einem sehr elastischen Gummifaden verzwirnt und durch spezielle Webtechnik in die Kante miteingewoben werden. Bei einer Beanspruchung auf Zug wird jetzt nur das Hebeband lastentragende Bandelement beansprucht und nicht das Schnittschutzelement.

## Patentansprüche

1. Textiles Band bestehend aus einem lasttragenden Bandelement (3) und einem Schnittschutzelement (2) zur Verwendung als Anschlagmittel und/oder zur Ladungssicherung, wobei das lasttragende Bandelement (3) mindestens teilweise vom Schnittschutzelement (2) umgeben ist, und das Schnittschutzelement (2) so angebracht ist, dass es nicht zum Tragen von Lasten bzw. zur Ladungssicherung vorgesehen ist und demnach nahezu kräftefrei vorliegt, **dadurch gekennzeichnet, dass** das Schnittschutzelement (2) mindestens teilweise aus einer Mischung von Hochleistungsfasern besteht.

2. Textiles Band nach Anspruch 1, **dadurch gekennzeichnet, dass** das Schnittschutzelement (2) schlauchförmig ausgebildet ist.

3. Textiles Band nach Anspruch 1, **dadurch gekennzeichnet, dass** das Schnittschutzelement (2) an der Bandkante des lasttragenden Bandelementes (3) eingearbeitet ist.

4. Textiles Band nach den Ansprüchen 1 und 3, **dadurch gekennzeichnet, dass** das Schnittschutzelement (2) an der Bandkante des lasttragenden Bandelementes (3) mit einem dehnfähigen Gummifaden eingearbeitet ist.

5. Textiles Band nach einem der Ansprüche 1 - 4, **dadurch gekennzeichnet, dass** das Schnittschutzelement (2) am lasttragenden Bandelement (3) stellenweise unverlierbar fixiert ist.

6. Textiles Band nach einem der Ansprüche 1 - 5, **dadurch gekennzeichnet, dass** das Schnittschutzelement (2) zur Erhöhung des Schnittschutzes mindestens teilweise aus Glasfasern besteht.

7. Textiles Band nach einem der Ansprüche 1 - 6, **dadurch gekennzeichnet, dass** die Hochleistungsfasern Stapelfasern, Endlosfasern oder eine Mischung daraus sind.

8. Textiles Band nach einem der Ansprüche 1 - 7, **dadurch gekennzeichnet, dass** die Hochleistungsfasern Aramid-, hochfeste Polyäthylen-, Keramik- oder Metallfasern sind.

9. Textiles Band nach einem der Ansprüche 1 - 8, **dadurch gekennzeichnet, dass** die Hochleistungsfasern eine Festigkeit von höher als 90 cN/tex aufweisen.

10. Textiles Band nach einem der Ansprüche 1 - 9, **dadurch gekennzeichnet, dass** die Hochleistungsfasern mit textilen Fasern umzwirnt sind.

11. Verwendung des textiles Band nach einem der Ansprüche 1 - 10 als Anschlagmittel und/oder zur Ladungssicherung.

## Claims

1. Narrow textile fabric consisting of a load-carrying narrow fabric element (3) and a cut-protection element (2) for use as a fastening means and/or for securing a load, the loading-carrying element (3) being enclosed at least partially by the cut-protection element (2) and the cut-protection element (2) being arranged such that it is not intended for the carrying or securing of loads and is hence present in a nearly force-free state, wherein the cut-protection element (2) consists at least partially of a mixture of heavy-duty fibers.

2. Narrow textile fabric as claimed in claim 1, wherein the cut-protection element (2) is tube-shaped.

3. Narrow textile fabric as claimed in claim 1, wherein the cut-protection element (2) is woven together with the edge of the load-carrying narrow fabric element (3).

4. Narrow textile fabric as claimed in claims 1 and 3, wherein the cut-protection element (2) at the edge of the load-carrying narrow fabric element (3) is woven together with an expandable rubber thread.

5. Narrow textile fabric as claimed in any one of claims 1 - 4, wherein the cut-protection element (2) is captively fixed to the load-carrying narrow fabric element (3) point-wise.

6. Narrow textile fabric as claimed in any one of claims 1 - 5, wherein the cut-protection element (2) consists at least partially of glass fibers for the purpose of greater cut protection.

7. Narrow textile fabric as claimed in any one of claims 1 - 6, wherein the heavy-duty fibers consist of stacked fibers, endless fibers or a mixture thereof.

8. Narrow textile fabric as claimed in any one of claims 1 - 7, wherein the heavy-duty fibers are aramide, high-strength polyethylene, ceramic or metal fibers.

9. Narrow textile fabric as claimed in any one of claims 1 - 8, wherein the heavy-duty fibers have a strength of greater than 90 cN/tex.

10. Narrow textile fabric as claimed in any one of claims 1 - 9, wherein the heavy-duty fibers are jacketed with twisted textile fibers.

11. Use of the narrow textile fabric as per any one of claims 1 - 10 as a fastening means and/or for securing a load.

## Revendications

1. Bande textile composée d'un élément de bande porteur (3) et d'un élément anti-coupure (2) destinée à être utilisée comme moyen de fixation et/ou pour maintenir des charges, l'élément de bande porteur (3) étant au moins partiellement entouré de l'élément anti-coupure (2) et l'élément anti-coupure (2) étant disposé de telle sorte à ne pas supporter ou maintenir des charges, ce qui ne le soumet pratiquement pas à l'action de forces, **caractérisée en ce que** l'élément anti-coupure (2) est au moins partiellement composé d'un mélange de fibres de haute performance.

2. Bande textile selon la revendication 1, **caractérisée en ce que** l'élément anti-coupure (2) se présente sous forme de tube.

3. Bande textile selon la revendication 1, **caractérisée en ce que** l'élément anti-coupure (2) est inséré dans le bord de l'élément de bande porteur (3).

4. Bande textile selon les revendications 1 et 3, **caractérisée en ce que** l'élément anti-coupure (2) est inséré avec un fil en caoutchouc élastique dans le bord de l'élément de bande porteur (3).

5. Bande textile selon une des revendications 1 à 4, **caractérisée en ce que** l'élément anti-coupure (2) est fixé par endroits de manière imperdable sur l'élément de bande porteur (3).

6. Bande textile selon une des revendications 1 à 5, **caractérisée en ce que** l'élément anti-coupure (2) est partiellement renforcé de fibres de verre permettant d'augmenter la protection contre les coupures.

7. Bande textile selon une des revendications 1 à 6, **caractérisée en ce que** les fibres de haute performance sont réalisées à partir de fibres coupées, de fibres continues ou d'un mélange des deux.

8. Bande textile selon une des revendications 1 à 7, **caractérisée en ce que** les fibres de haute performance sont des fibres d'aramide, des fibres de polyéthylène de haute densité, des fibres céramiques ou des fibres métalliques.

9. Bande textile selon une des revendications 1 à 8, **caractérisée en ce que** les fibres de haute performance présentent une ténacité supérieure à 90 cN/tex.

10. Bande textile selon une des revendications 1 à 9, **caractérisée en ce que** les fibres de haute performance sont retordues avec des fibres textiles.

11. Bande textile selon une des revendications 1 à 10 utilisée comme moyen de fixation et/ou pour maintenir des charges.
